# EUROPEAN PATENT SPECIFICATION

(11) **EP 4 285 200 B1**
(45) Date of publication and mention of the grant of the patent: **27.08.2025**
(21) Application number: 21709940.7
(22) Date of filing: 03.03.2021
(51) Int. Cl.: G06F 1/16

(54) **SUPPORT ARRANGEMENT FOR FOLDABLE ELECTRONIC APPARATUS**
STÜTZANORDNUNG FÜR KLAPPBARE ELEKTRONISCHE VORRICHTUNG
AGENCEMENT DE SUPPORT POUR APPAREIL ÉLECTRONIQUE PLIABLE

(43) Date of publication of application: 06.12.2023
(73) Proprietor: Huawei Technologies Co., Ltd., Shenzhen, Guangdong 518129 (CN)
(72) Inventor: HUITTINEN, Otto, 16440 Kista (SE)
(74) Representative: Isarpatent
(86) International application number: PCT/EP2021/055228
(87) International publication number: WO 2022/184243

(56) References cited:
- EP-A1- 3 674 836
- US-A1- 2020 233 467
- US-B1- 9 506 281

## Description

### TECHNICAL FIELD

The invention relates to a support arrangement for an electronic apparatus, the support arrangement comprising a pivotable support member and a hinge structure configured for connecting the support member to the electronic apparatus along a pivot axis, as well as an electronic apparatus using such a support arrangement.

### BACKGROUND

Current larger foldable electronic apparatuses such as laptops or tablet and keyboard combinations face stability issues, since the display section of the laptop or the tablet is usually heavier than the corresponding keyboard. When opening or unfolding the apparatus, such that the display or tablet is at a suitable viewing angle with respect to the keyboard, the apparatus is prone to topping over and fall onto the back of the display or tablet.

One solution to such stability issues is to increase the weight of the keyboard, which is contrary to current development towards as lightweight electronic apparatuses as possible. A further solution is to place the apparatus in a separate stand, holding the apparatus in position. In order to avoid having to use separate, additional components, the display or tablet can be arranged away from the edge of the keyboard, towards the center of the keyboard, effectively reducing the useful area of the keyboard.

Optionally, the apparatus can be provided with a support member, preferably a member which can be folded out from the back of the display or the tablet and find support against the surface onto which the apparatus is placed. Present support members are folded manually, requiring separate action from the user to open, close and adjust its position, which is a nuisance to the user.

Hence, there is a need for providing an improved support arrangement that is lightweight, and requires no action to be taken by the user.

US 2020/233467 A1 discloses a hinge for rotating part, and the hinge comprises a first cam, a second cam, a fixed cam, a slide cam, a spring and a damper, and further discloses a mobile terminal that uses the hinge. The hinge for rotating part provided in the present utility model has the advantages of simple structure and easy assembling. It can be connected with a third rotating body in addition to two relatively rotatable bodies, and can achieve independent rotation and linkage of the second rotating body and the third rotating body according to the designed rotation procedure as required and achieve self-locking of hinge, and the third rotating body can be damped and buffered at the end of the rotating stroke. The hinge of the present utility model can be applied to the connection of various three rotating bodies, especially suitable for the connection of bracket, keyboard and screen in the mobile terminal. It is easy to open and close and it can provide stable support when the mobile terminal is within the range of opening angles.

US 9,506,281 B1 discloses a load bearing rotation lock mechanism including disks or cylinders with teeth or a combination of both that interlock radially between their inner and outer surface areas, or frontal areas, or both, where one of the disks or cylinders is attached to a fixed surface area and the other disk or cylinder is attached to a pivoting arm, plate, or other kind of load bearing support element, and where one of the disks or cylinders is able to mesh (lock) and un-mesh (unlock) from the other disk or cylinder by protruding, retracting, or sliding laterally over a common, continuous or divided axis, shaft, or channel thereby freezing the angular position of the pivoting arm, plate, or other kind of load bearing support element with respect to the fixed surface area at the time the disks, cylinders, or a combination of both, mesh (lock) with each other and unfreezing the pivoting arm, plate, or other kind of load bearing support element to pivot freely with respect to the fixed surface area when the disks, cylinders, or combination of both un-mesh (unlock) from one another.

### SUMMARY

Hence, the object of the present invention is to provide a support arrangement for an electronic apparatus and a portable electronic apparatus which are lightweight, and require no action to be taken by the user. The foregoing and other objects are achieved by the features of the independent claims. Further embodiments (implementations) and improvements of the present invention are listed in the dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, there is provided a support arrangement for an electronic apparatus, which arrangement comprises a pivotable support member and a hinge structure configured for connecting the support member to the electronic apparatus along a pivot axis. The hinge structure comprises a first shaft element and a second shaft element extending along the pivot axis, the first shaft element being rotatably connected to the electronic apparatus, and the second shaft element being fixedly connected to the support member. A synchronization mechanism is operably connected to the first shaft element and the second shaft element and configured to move along the pivot axis. The synchronization mechanism is configured to, when located at a first position along the pivot axis, engage the first shaft element such that, when rotating the first shaft element, the second shaft element rotates along with the first shaft element both clockwise and anticlockwise so that the support member is pivoted with regard to the electronic apparatus. Furthermore, the synchronization mechanism is configured to, when located at a second position along the pivot axis, disengage the first shaft element and interlock the second shaft element with the electronic apparatus such that the second shaft element is prevented from rotating along with the first shaft element so as to lock the support member with regards to the electronic apparatus.

Such a configuration provides a support member which does not require any separate action to be taken by the user. The support member takes up substantially no extra space when the electronic apparatus is closed but still provides fully reliable support when the electronic apparatus is open.

In a possible implementation form of the first aspect, the synchronization mechanism engages a surface of the electronic apparatus by means of at least one protrusion and corresponding recess, one of the protrusion and the recess being arranged on a surface of the synchronization mechanism, and the other of the protrusion and the recess being arranged on the surface of the electronic apparatus, allowing for small, reliable, and cost-efficient engagement.

In accordance with the invention in the first aspect, the synchronization mechanism comprises a hollow element configured to at least partially enclose the first shaft element when in the first position, and to at least partially enclose the first shaft element and the second shaft element when in the second position. This avoids any negative influence on the movement of the synchronization mechanism while providing extra stability to the engagement with the first shaft element and the second shaft element.

According to the invention in the first aspect, the hollow element engages the second shaft element by means of at least one ridge and corresponding groove, one of the ridge and the groove extending along a peripheral surface of the second shaft element, and the other of the ridge and the groove extending along an inner surface of the hollow element This allows for small, reliable, and cost-efficient engagement.

In a further possible implementation form of the first aspect, the hollow element engages the first shaft element by means of at least one ridge and corresponding groove, one of the ridge and the groove being arranged on a peripheral surface of the first shaft element, and the other of the ridge and the groove being arranged on an inner surface of the hollow element, allowing for small, reliable, and cost-efficient engagement.

In a further possible but not claimed implementation form of the first aspect, the ridge and groove and/or the protrusion and recess extend in parallel with the pivot axis, such that there is no negative influence on the movement of the synchronization mechanism.

According to the invention in the first aspect, the synchronization mechanism further comprises a sliding element configured to move the hollow element in a first direction along the pivot axis, from the first position to the second position, generating movement of the hollow element while not affecting the movement of the first member negatively.

In a further possible implementation form of the first aspect, the synchronization mechanism further comprises a return element configured to move the hollow element in a second direction along the pivot axis, from the second position to the first position, providing a simple and efficient solution for returning the hollow element to the first position.

In a further possible implementation form of the first aspect, the first shaft element comprises a friction element configured to engage a surface of the electronic apparatus such that rotation of the first shaft element requires a force above a friction coefficient of the friction element, providing enough resistance for the first member of the electronic apparatus to remain at a stable angular position to the second member.

According to the invention in the first aspect, the sliding element is configured to move the hollow element by means of a cam mechanism, providing a simple and reliable solution for moving the hollow element.

In a further possible but not claimed implementation form of the first aspect, the sliding element is arranged between the hollow element and the friction element, providing a well-functioning and spatially efficient configuration.

In a further possible but not claimed implementation form of the first aspect, the return element is a spring element or a cam element, allowing the hollow element to be returned by means of an automatic, simple, and reliable solution.

According to the invention in the first aspect, the second shaft element comprises a first shaft and a second shaft, the first shaft being operably connected to the synchronization mechanism, the second shaft being fixedly connected to the support member, allowing the second shaft element to rotate at different angular speeds.

According to the invention in the first aspect, the second shaft element further comprises a gear arrangement interconnecting the first shaft and the second shaft such that the second shaft rotates simultaneously with, and at a higher angular speed than, the first shaft, allowing the support member and the first member to rotate simultaneously without affecting each other.

According to a second aspect according to the invention, the invention also provides an electronic apparatus comprising a first member, a second member, and the support arrangement according to the above. The first member is pivotally connected to the second member at least partially by means of the support arrangement along the pivot axis of the support arrangement, and the first shaft element of the support arrangement is fixedly connected to the first member and rotatably connected to the second member.

Such a configuration provides an electronic apparatus comprising a support member the operation of which does not require any separate action to be taken by the user. The support member takes up substantially no extra space when the electronic apparatus is closed but still provides fully reliable support when the electronic apparatus is open.

In a possible but not claimed implementation form of the second aspect, the first member comprises a display and the second member comprises a keyboard, allowing the electronic apparatus to be any kind of laptop or 2-in-1 device.

In a further possible implementation form of the second aspect, the second member comprises a hollow cylindrical section configured to receive the hinge structure, a center axis of the hollow cylindrical section being coaxial with the pivot axis, the synchronization mechanism of the support arrangement being configured to engage an inner surface of the hollow cylindrical section, providing extra stability to the hinge structure and the electronic apparatus.

In a further possible implementation form of the second aspect, the pivotable support member of the support arrangement pivots simultaneously with, and at a higher angular speed than, the first member, around the pivot axis as long as the synchronization mechanism is in the first position, allowing the support member and the first member to rotate simultaneously without affecting each other.

In a further possible implementation form of the second aspect, the synchronization mechanism is moved from the first position to the second position when the first member reaches a preset viewing angle relative the second member, allowing the support member to be folded inwards towards the second member simultaneously, and automatically, with the first member.

In a further possible but not claimed implementation form of the second aspect, the preset viewing angle is between 45° and 110° relative the second member, preferably less than 90°, more preferably less than 100°, allowing the support member to be folded outwards and provide support to the electronic apparatus at a wide and useful range of viewing angles.

In a further possible but not claimed implementation form of the second aspect, the synchronization mechanism is moved from the second position to the first position when the first member reaches an angle of less than 100° relative the second member, preferably less than 90°, allowing the support member to start being folded inwards towards the second member as soon as the angular position of the first member prevents the first member from being comfortably viewed by the user.

In a further possible but not claimed implementation form of the second aspect, when the electronic apparatus is closed, the first member, the second member, and the support member are superimposed on top of each other, i.e. extending substantially at 0°, allowing for an as thin electronic apparatus as possible.

In a further possible but not claimed implementation form of the second aspect, when the electronic apparatus is open, the first member extends at between 90° and 179° to the second member, and the support member extends at between 180° and 200° to the second member, allowing an electronic apparatus which is well supported and stable at a range of viewing angles.

In a further possible implementation form of the second aspect, the first member is configured to be releasably connected to the second member at least partially by means of the hinge structure, allowing the electronic apparatus to be a 2-in-1 device.

These and other aspects will be apparent from the embodiment(s) described below.

### BRIEF DESCRIPTION OF THE DRAWINGS

In the following detailed portion of the present disclosure, the aspects, embodiments, and implementations will be explained in more detail with reference to the example embodiments shown in the drawings. However, it should be noted that in the following description, features
which in the above summary of the invention have been marked as "not claimed" or "according to the invention" are also hereinafter, when they are described and explained with reference to the drawings, to be understood as "not claimed/not part of the invention" or "according to the invention".
Fig. 1a shows a perspective view of a support arrangement for an electronic apparatus or a portable electronic apparatus in accordance with an example of the embodiments of the disclosure, wherein components of said support arrangement and electronic apparatus have assumed a first position and a support member of the support arrangement to be pivotable with regards to the electronic apparatus;
Fig. 1b is a partial perspective view of the support arrangement shown in Fig. 1a;
Fig. 2a shows a perspective view of a support arrangement for an electronic apparatus in accordance with an example of the embodiments of the disclosure, wherein components of said support arrangement and electronic apparatus have assumed a second position and a support member of the support arrangement to be fixed with regards to the electronic apparatus;
Fig. 2b is a partial perspective view of the support arrangement shown in Fig. 2a;
Fig. 3 shows a partial perspective view of a support arrangement for an electronic apparatus in accordance with an example of the embodiments of the disclosure;
Fig. 4a shows a perspective view of an electronic apparatus in accordance with an example of the embodiments of the disclosure, wherein the support arrangement and electronic apparatus are in an intermediate position between a closed and fully open position;
Fig. 4b shows a partial perspective view of the support arrangement when in the intermediate position shown in Fig. 4a;
Fig. 5a shows a perspective view of an electronic apparatus in accordance with an example of the embodiments of the disclosure, wherein the support arrangement and electronic apparatus are in a fully open position;
Fig. 5b shows a partial perspective view of the support arrangement when in the fully open position shown in Fig. 5a.

### DETAILED DESCRIPTION

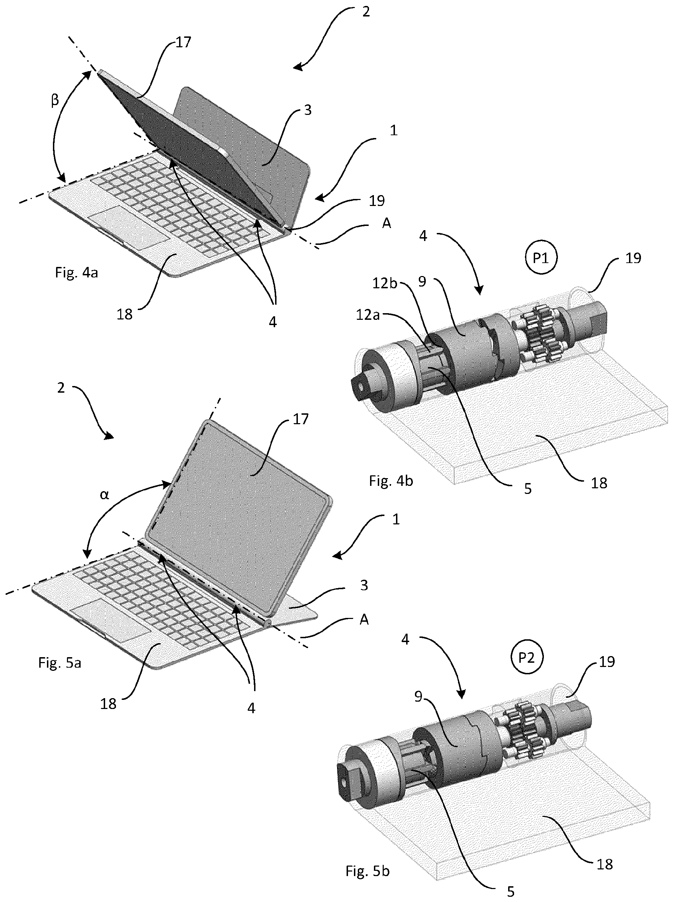

Figs. 4a and 5a show an electronic apparatus 2 comprising a first member 17, a second member 18, and a support arrangement 1 described in more detail below. The first member 17 may comprise a display and the second member 18 may comprise a keyboard. The first member 17 may be a tablet and the second member 18 may be a keyboard that is releasably connected to the first member 17. The electronic apparatus 2 may be a 2-in-1 device such as a laptop with a removable display, i.e. the first member 17 being a display and the second member 18 a keyboard which is releasably connected to the first member 17. Furthermore, the electronic apparatus 2 may be a laptop wherein the first member 17 is a display and the second member 18 a keyboard which is fixedly connected to the first member 17.

Support arrangement 1 comprises a support member 3 and a hinge structure 4. The first member 17 may be pivotally connected to the second member 18 at least partially by means of the hinge structure 4 along a pivot axis A. The pivot axis A of the support arrangement 1 is parallel to, and may be colinear with, the pivot axis of the electronic apparatus 2.

The second member 18 of the electronic device 2 may comprise a hollow cylindrical section 19 configured to receive the hinge structure 4, a center axis of the hollow cylindrical section 19 being coaxial with the pivot axis A. Support arrangement 1 may be configured to engage an inner surface of the hollow cylindrical section 19. The hollow cylindrical section 19 may, oppositely, be arranged in the first member 17.

When the electronic apparatus 2 is closed, the first member 17, the second member 18, and the support member 3 of the support arrangement 1 may be superimposed on top of each other, i.e. extending substantially at 0° (not shown). Support member 3 may be a plate-shaped element connected along one edge to the hinge structure 4. The support member 3 may pivot simultaneously with, and at a higher angular speed than, the first member 17 around the pivot axis A when said electronic apparatus 2 is being opened or closed, as suggested in Fig. 4a. When the electronic apparatus 2 is open, as shown in Fig. 5a, the first member 17 may extend at an angle of between 90° and 179° to the second member 18, a so-called viewing angle, and the support member 3 may simultaneously extend at an angle of between 180° and 200° to the second member 18.

The present invention also relates to a support arrangement 1 for an electronic apparatus 2, the support arrangement 1 comprising a pivotable support member 3 and a hinge structure 4 configured for connecting the support member 3 to the electronic apparatus 2 along a pivot axis A. The hinge structure 4 comprises a first shaft element 5 and a second shaft element 6 extending along the pivot axis A, the first shaft element 5 being rotatably connected to the electronic apparatus 2, the second shaft element 6 being fixedly connected to the support member 3, and a synchronization mechanism 7 operably connected to the first shaft element 5 and the second shaft element 6 and configured to move along the pivot axis A. The synchronization mechanism 7 is configured to, when located at a first position P1 along the pivot axis A, engage the first shaft element 5 such that, when rotating the first shaft element 5, the second shaft element 6 rotates along with the first shaft element 5 both clockwise and anticlockwise so that the support member 3 is pivoted with regard to the electronic apparatus 2. The synchronization mechanism 7 is also configured to, when located at a second position P2 along the pivot axis A, disengage the first shaft element 5 and interlock the second shaft element 6 with the electronic apparatus 2 such that the second shaft element 6 is prevented from rotating along with the first shaft element 5 so as to lock the support member 3 with regards to the electronic apparatus 2.

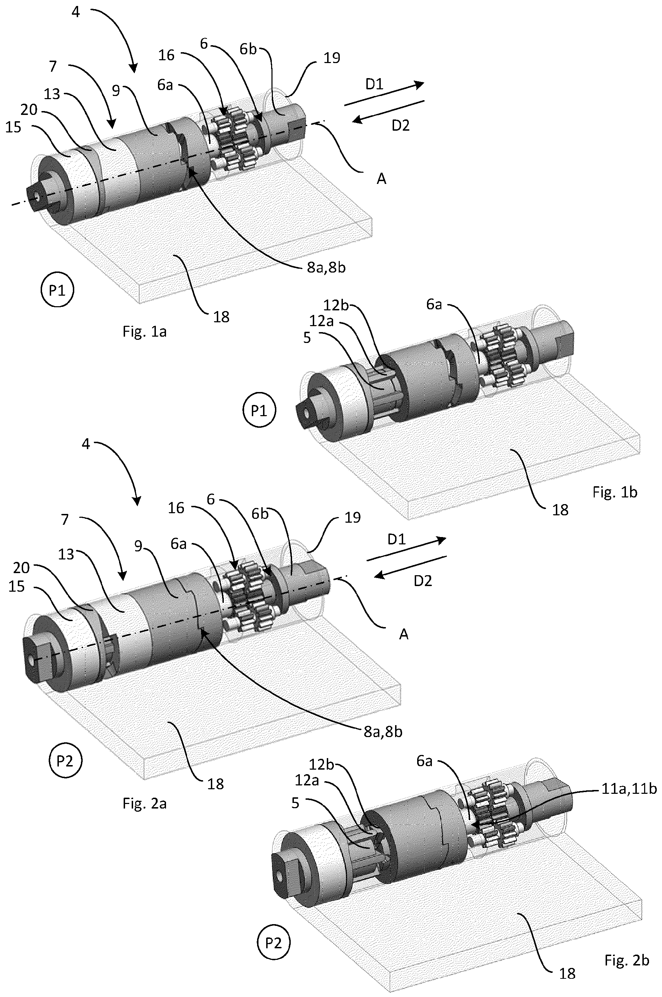

More specifically, as shown in Figs. 4a and 5a, the support arrangement 1 comprises the pivotable support member 3 and the hinge structure 4. The hinge structure 4, as shown in Figs. 1a to 2b, is configured for connecting the support member 3 to the electronic apparatus 2 along the above-mentioned pivot axis A. The hinge structure 4 comprises a first shaft element 5 and a second shaft element 6 extending coaxially along the pivot axis A. The first shaft element 5 is connected to the electronic apparatus 2, preferably fixedly connected to the first member 17 and rotatably connected to the second member 18. The second shaft element 6 is fixedly connected to support member 3.

A synchronization mechanism 7 is operably connected to the first shaft element 5 and the second shaft element 6 and is configured to move, preferably slide, along the pivot axis A, as shown in Figs. 1a and 2a, 1b and 2b, and 4b and 5b.

The synchronization mechanism 7 is configured to, when located at a first position P1 along the pivot axis A shown in Figs. 1a, 1b, and 4b, engage the first shaft element 5. As a result, the second shaft element 6 rotates along with the first shaft element 5, when rotating the first shaft element 5. The second shaft element 6 rotates together with the first shaft element 5 both clockwise and anticlockwise, i.e., both when opening and closing the electronic apparatus 2. This engagement allows support member 3, which is connected to the second shaft element 6, to pivot with regard to the electronic apparatus 2, more specifically with regard to the second member 18.

The synchronization mechanism 7 is also configured to, when located at a second position P2 along the pivot axis A shown in Figs. 2a, 2b, and 5b, disengage the first shaft element 5. In the second position P2, the synchronization mechanism 7 instead interlocks the second shaft element 6 with the electronic apparatus 2 such that the second shaft element 6 is prevented from rotating along with the first shaft element 5. This interlocking prevents support member 3, which is connected to the second shaft element 6, from pivoting any further such that it instead can function as a support member for the electronic apparatus 2.

The synchronization mechanism 7 may engage a surface of the electronic apparatus 2 by means of at least one protrusion 8a and a corresponding recess 8b, as illustrated in Figs 2a and 2b. One of the protrusion 8a and the recess 8b may be arranged on a surface of the synchronization mechanism 7, such as a short end of hollow element 9, and the other of the protrusion 8a and the recess 8b may be arranged on one surface of the electronic apparatus 2, such as a surface of a further element fixed to the second member 18 or an inner surface of the hollow cylindrical section 19. The protrusions 8a and the recesses 8b may together have a saw-toothed outline, or may have any other suitable, complementary shapes. The saw-tooth outline allows the synchronization mechanism 7 to slide along the pivot axis A as the first member 17, and hence the first shaft element 5 rotates, allowing the synchronization mechanism 7 to move between the first position P1 and the second position P2.

As mentioned, the synchronization mechanism 7 comprises a hollow element 9. The hollow element 9 is preferably coaxial with the first shaft element 5 and configured to at least partially enclose the first shaft element 5 only when in the first position P1, as shown in Figs. 1a and 1b. The hollow element 9 is configured to, when in the second position P2, at least partially enclose the first shaft element 5 as well as the second shaft element 6 as shown in Figs. 2a and 2b. By enclosing both the first shaft element 5 and the second shaft element 6, the hollow element 9 provides an additional interlocking of the first shaft element 5 and the second shaft element 6.

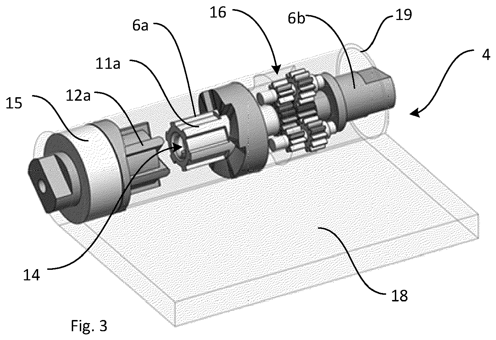

The hollow element 9 engages the second shaft element 6 by means of at least one ridge 11a and corresponding groove 11b. One of the ridge 11a and the groove 11b may extend along a peripheral surface of the second shaft element 6, longitudinally as shown in Fig. 3, and the other of the ridge 11a and the groove 11b may extend along an inner surface of the hollow element 9 (not shown). The ridge 11a is configured to slide into, or out of, groove 11b as the hollow element 9 slides along pivot axis A.

Correspondingly, the hollow element 9 may engage the first shaft element 5 by means of at least one ridge 12a and corresponding groove 12b. As shown in Figs. 1b and 2b, one of the ridge 12a and the groove 12b may be arranged on a peripheral surface of the first shaft element 5, and the other of the ridge 12a and the groove 12b may be arranged on an inner surface of the hollow element 9.

The ridges 11a, 12a, the grooves 11b, 12b, the protrusions 8a, and/or the recesses 8b may extend longitudinally, parallel to the pivot axis A.

The first shaft element 5 may furthermore comprise a friction element 15 configured to engage a surface of the electronic apparatus 2 such that rotation of the first shaft element 5 requires a force above a friction coefficient of the friction element 15. The friction element 15 may be pivotally fixed to the first shaft element 5, and configured to engage an inner surface of the hollow cylindrical section 19 connected to the second member 18.

The friction element 15 may instead be fixedly connected to the hollow cylindrical section 19 and configured to engage a surface of the first member 17.

According to the invention, the synchronization mechanism 7 comprises a sliding element 13 configured to move the hollow element 9 in a first direction D1 along the pivot axis A, from the first position P1 to the second position P2 as the electronic apparatus 2 is being opened, and the first member 17 pivoted away from the second member 18. The sliding element 13 is configured to move the hollow element 9 by means of a cam mechanism, as suggested in Fig. 2b. The sliding element 13 forms a first part of the cam mechanism, while a second part 20 of the cam mechanism is formed by a section of the first shaft element 5. The sliding element 13 may be arranged between the hollow element 9 and the friction element 15, optionally between the second part 20 of the cam mechanism and the hollow element 9.

The synchronization mechanism 7 may also comprise a return element 14 configured to move the hollow element 9 in a second direction D2 along the pivot axis A, from the second position P2 to the first position P1, as the electronic apparatus 2 is being closed, and the first member 17 pivoted towards the second member 18. The return element 14 may be a spring element, as suggested in Fig. 3, or a cam element (not shown).

The second shaft element 6 may comprise a first shaft 6a and a second shaft 6b, the first shaft 6a being operably connected to the synchronization mechanism 7, and the second shaft 6b being fixedly connected to the support member 3.

The second shaft element 6 may further comprise a gear arrangement 16 interconnecting the first shaft 6a and the second shaft 6b such that the second shaft 6b rotates simultaneously with, and at a higher angular speed than, the first shaft 6a.

The pivotable support member 3 of the support arrangement 1 may pivot simultaneously with, and at a higher angular speed than, the first member 17, around the pivot axis A as long as the synchronization mechanism 7 is in the first position P1 and the first shaft element 5 is interconnected with the second shaft element 6.

The synchronization mechanism 7 may be moved from the first position P1 to the second position P2 when the first member 17 reaches a preset viewing angle α relative the second member 18. Conversely, the synchronization mechanism 7 may be moved from the second position P2 to the first position P1 when the first member 17 reaches an angle β of less than 100° relative the second member 18, preferably less than 90°. The preset viewing angle α may be between 45° and 110° relative the second member 18, preferably less than 90°, as suggested in Fig. 5a, more preferably less than 100°. As long at the synchronization mechanism 7 is in the second position P2, the viewing angle of the first member 17 may be adjusted by the user without moving the support member 3. However, as soon as the first member 17 is pivoted, from an open position, to an angle which is less than the preset viewing angle α, the synchronization mechanism 7 moves to the first position P1 and interconnects the first shaft element 5 with the second shaft element 6 such that the support member 3 pivots along with the first member 17 towards a position in which the electronic apparatus 2 is closed and, preferably, the support member 3, the first member 17, and the second member 18 are stacked on top of each other. Support member 3 is, in other words and in accordance with the invention of the second aspect, moved completely without any separate action having to be taken by the user.

## Claims

1. A support arrangement (1) for an electronic apparatus (2), said support arrangement (1) comprising:
- a pivotable support member (3); and
- a hinge structure (4) configured for connecting said support member (3) to said electronic apparatus (2) along a pivot axis (A),
said hinge structure (4) comprising:
a first shaft element (5) and a second shaft element (6) extending along said pivot axis (A), said first shaft element (5) being rotatably connected to said electronic apparatus (2),
said second shaft element (6) being fixedly connected to said support member (3), and
a synchronization mechanism (7) operably connected to said first shaft element (5) and said second shaft element (6) and configured to move along said pivot axis (A),
said synchronization mechanism (7) being configured to, when located at a first position (P1) along said pivot axis (A), engage said first shaft element (5) such that, when rotating said first shaft element (5), said second shaft element (6) rotates along with said first shaft element (5) both clockwise and anticlockwise so that the said support member (3) is pivoted with regard to said electronic apparatus (2), and
said synchronization mechanism (7) being configured to, when located at a second position (P2) along said pivot axis (A), disengage said first shaft element (5) and interlock said second shaft element (6) with said electronic apparatus (2) such that said second shaft element (6) is prevented from rotating along with said first shaft element (5) so as to lock said support member (3) with regards to said electronic apparatus (2);
wherein said synchronization mechanism (7) further comprises a hollow element (9) configured to at least partially enclose said first shaft element (5) when in said first position (P1), and
to at least partially enclose said first shaft element (5) and said second shaft element (6) when in said second position (P2);
wherein said hollow element (9) engages said second shaft element (6) by means of at least one ridge (11a) and corresponding groove (11b), one of said ridge (11a) and said groove (11b) extending along a peripheral surface of said second shaft element (6), and the other of said ridge (11a) and said groove (11b) extending along an inner surface of said hollow element (9),
wherein said synchronization mechanism (7) further comprises a sliding element (13) configured to move said hollow element (9) in a first direction (D1) along said pivot axis (A), from said first position (P1) to said second position (P2); and
wherein said second shaft element (6) comprises a first shaft (6a) and a second shaft (6b), said first shaft (6a) being operably connected to said synchronization mechanism (7), said second shaft (6b) being fixedly connected to said support member (3);
wherein said second shaft element (6) further comprises a gear arrangement (16) interconnecting said first shaft (6a) and said second shaft (6b) such that said second shaft (6b) rotates simultaneously with, and at a higher angular speed than, said first shaft (6a),
wherein the sliding element (13) is configured to move the hollow element (9) by means of a cam mechanism, and the sliding element (13) forms a first part of the cam mechanism, while a second part (20) of the cam mechanism is formed by a section of the first shaft element (5).

2. The support arrangement (1) according to claim 1, wherein said synchronization mechanism (7) engages a surface of said electronic apparatus (2) by means of at least one protrusion (8a) and corresponding recess (8b), one of said protrusion (8a) and said recess (8b) being arranged on a surface of said synchronization mechanism (7), and the other of said protrusion (8a) and said recess (8b) being arranged on said surface of said electronic apparatus (2).

3. The support arrangement (1) according to claim 1, wherein said hollow element (9) engages said first shaft element (5) by means of at least one ridge (12a) and corresponding groove (12b), one of said ridge (12a) and said groove (12b) being arranged on a peripheral surface of said first shaft element (5), and the other of said ridge (12a) and said groove (12b) being arranged on an inner surface of said hollow element (9).

4. The support arrangement (1) according to any one of claims 1 to 3, wherein said synchronization mechanism (7) further comprises a return element (14) configured to move said hollow element (9) in a second direction (D2) along said pivot axis (A), from said second position (P2) to said first position (P1).

5. The support arrangement (1) according to any one of the previous claims, wherein said first shaft element (5) comprises a friction element (15) configured to engage a surface of said electronic apparatus (2) such that rotation of said first shaft element (5) requires a force above a friction coefficient of said friction element (15).

6. An electronic apparatus (2) comprising a first member (17), a second member (18), and the support arrangement (1) according to any one of claims 1 to 5,
said first member (17) being pivotally connected to said second member (18) at least partially by means of said support arrangement (1) along the pivot axis (A) of said support arrangement (1), the first shaft element (5) of said support arrangement (1) being fixedly connected to said first member (17) and rotatably connected to said second member (18), wherein when the first member (17) is pivoted, from an open position, to an angle which is less than a preset viewing angle (α), the synchronization mechanism (7) is adapted to move to the first position (P1) and interconnect the first shaft element (5) with the second shaft element (6) such that the support member (3) pivots along with the first member (17) towards a position in which the electronic apparatus (2) is closed without any separate action having to be taken by a user.

7. The electronic apparatus (2) according to claim 6, wherein said second member (18) comprises a hollow cylindrical section (19) configured to receive said hinge structure (4), a center axis of said hollow cylindrical section (19) being coaxial with said pivot axis (A), the synchronization mechanism (7) of said support arrangement (1) being configured to engage an inner surface of said hollow cylindrical section (19).

8. The electronic apparatus (2) according to claim 6 or 7, wherein the pivotable support member (3) of said support arrangement (1) pivots simultaneously with, and at a higher angular speed than, said first member (17), around said pivot axis (A) as long as the synchronization mechanism (7) is in the first position (P1).

9. The electronic apparatus (2) according to any one of claims 6 to 8, wherein said synchronization mechanism (7) is moved from the first position (P1) to the second position (P2) when said first member (17) reaches a preset viewing angle (α) relative said second member (18).

10. The electronic apparatus (2) according to any one of claims 6 to 9, wherein said first member (17) is configured to be releasably connected to said second member (18) at least partially by means of said hinge structure (4).

## Patentansprüche

1. Stützanordnung (1) für eine elektronische Vorrichtung (2), wobei die Stützanordnung (1) Folgendes umfasst:
- ein schwenkbares Stützelement (3); und
- eine Scharnierstruktur (4), die zum Verbinden des Stützelements (3) mit der elektronischen Vorrichtung (2) entlang einer Schwenkachse (A) konfiguriert ist,
wobei die Scharnierstruktur (4) Folgendes umfasst:
ein erstes Wellenelement (5) und ein zweites Wellenelement (6), die sich entlang der Schwenkachse (A) erstrecken, wobei das erste Wellenelement (5) drehbar mit der elektronischen Vorrichtung (2) verbunden ist,
das zweite Wellenelement (6) fest mit dem Stützelement (3) verbunden ist, und
einen Synchronisationsmechanismus (7), der mit dem ersten Wellenelement (5) und dem zweiten Wellenelement (6) wirkverbunden und dazu konfiguriert ist, sich entlang der Schwenkachse (A) zu bewegen,
der Synchronisationsmechanismus (7) dazu konfiguriert ist, wenn er sich in einer ersten Position (P1) entlang der Schwenkachse (A) befindet, derart mit dem ersten Wellenelement (5) in Eingriff zu stehen, dass sich das zweite Wellenelement (6) beim Drehen des ersten Wellenelements (5) zusammen mit dem ersten Wellenelement (5) sowohl im Uhrzeigersinn als auch gegen den Uhrzeigersinn dreht, sodass das Stützelement (3) in Bezug auf die elektronische Vorrichtung (2) geschwenkt wird, und
wobei der Synchronisationsmechanismus (7) dazu konfiguriert ist, wenn er sich in einer zweiten Position (P2) entlang der Schwenkachse (A) befindet, das erste Wellenelement (5) außer Eingriff zu bringen und das zweite Wellenelement (6) derart mit der elektronischen Vorrichtung (2) zu verriegeln, dass das zweite Wellenelement (6) daran gehindert wird, sich zusammen mit dem ersten Wellenelement (5) zu drehen, um das Stützelement (3) in Bezug auf die elektronische Vorrichtung (2) zu verriegeln;
wobei der Synchronisationsmechanismus (7) ferner ein hohles Element (9) umfasst, das dazu konfiguriert ist, das erste Wellenelement (5) zumindest teilweise zu umschließen, wenn es in der ersten Position (P1) steht, und das erste Wellenelement (5) und das zweite Wellenelement (6) zumindest teilweise zu umschließen, wenn sie in der zweiten Position (P2) stehen;
wobei das hohle Element (9) durch zumindest einen Grat (11a) und eine entsprechende Nut (11b) mit dem zweiten Wellenelement (6) in Eingriff steht, sich einer des Grats (11a) und der Nut (11b) entlang einer Umfangsfläche des zweiten Wellenelements (6) erstreckt und sich der andere des Grats (11a) und der Nut (11b) entlang einer Innenfläche des hohlen Elements (9) erstreckt,
wobei der Synchronisationsmechanismus (7) ferner ein Gleitelement (13) umfasst, das dazu konfiguriert ist, das hohle Element (9) in einer ersten Richtung (D1) entlang der Schwenkachse (A) von der ersten Position (P1) in die zweite Position (P2) zu bewegen; und
wobei das zweite Wellenelement (6) eine erste Welle (6a) und eine zweite Welle (6b) umfasst, wobei die erste Welle (6a) mit dem Synchronisationsmechanismus (7) wirkverbunden ist und die zweite Welle (6b) fest mit dem Stützelement (3) verbunden ist;
wobei das zweite Wellenelement (6) ferner eine Getriebeanordnung (16) umfasst, welche die erste Welle (6a) und die zweite Welle (6b) derart miteinander verbindet, dass sich die zweite Welle (6b) gleichzeitig mit der ersten Welle (6a) und mit einer höheren Winkelgeschwindigkeit als diese dreht,
wobei das Gleitelement (13) dazu konfiguriert ist, das hohle Element (9) durch einen Nockenmechanismus zu bewegen, und das Gleitelement (13) einen ersten Teil des Nockenmechanismus ausbildet, während ein zweiter Teil (20) des Nockenmechanismus durch einen Abschnitt des ersten Wellenelements (5) ausgebildet ist.

2. Stützanordnung (1) nach Anspruch 1, wobei der Synchronisationsmechanismus (7) durch zumindest einen Vorsprung (8a) und eine entsprechende Aussparung (8b) mit einer Fläche der elektronischen Vorrichtung (2) in Eingriff steht, wobei einer des Vorsprungs (8a) und der Aussparung (8b) auf einer Fläche des Synchronisationsmechanismus (7) angeordnet ist und der andere des Vorsprungs (8a) und der Aussparung (8b) auf der Fläche der elektronischen Vorrichtung (2) angeordnet ist.

3. Stützanordnung (1) nach Anspruch 1, wobei das hohle Element (9) durch zumindest einen Grat (12a) und eine entsprechende Nut (12b) mit dem ersten Wellenelement (5) in Eingriff steht, wobei einer des Grats (12a) und der Nut (12b) auf einer Umfangsfläche des ersten Wellenelements (5) angeordnet ist und der andere des Grats (12a) und der Nut (12b) auf einer Innenfläche des hohlen Elements (9) angeordnet ist.

4. Stützanordnung (1) nach einem der Ansprüche 1 bis 3, wobei der Synchronisationsmechanismus (7) ferner ein Rückstellelement (14) umfasst, das dazu konfiguriert ist, das hohle Element (9) in einer zweiten Richtung (D2) entlang der Schwenkachse (A) von der zweiten Position (P2) in die erste Position (P1) zu bewegen.

5. Stützanordnung (1) nach einem der vorhergehenden Ansprüche, wobei das erste Wellenelement (5) ein Reibungselement (15) umfasst, das dazu konfiguriert ist, derart mit einer Fläche der elektronischen Vorrichtung (2) in Eingriff zu stehen, dass die Drehung des ersten Wellenelements (5) eine Kraft über einem Reibungskoeffizienten des Reibungselements (15) erfordert.

6. Elektronische Vorrichtung (2) umfassend ein erstes Element (17), ein zweites Element (18) und die Stützanordnung (1) nach einem der Ansprüche 1 bis 5,
wobei das erste Element (17) zumindest teilweise durch die Stützanordnung (1) entlang der Schwenkachse (A) der Stützanordnung (1) schwenkbar mit dem zweiten Element (18) verbunden ist, wobei das erste Wellenelement (5) der Stützanordnung (1) fest mit dem ersten Element (17) und drehbar mit dem zweiten Element (18) verbunden ist, wobei, wenn das erste Element (17) aus einer offenen Position in einem Winkel geschwenkt wird, welcher kleiner als ein voreingestellter Betrachtungswinkel (α) ist, der Synchronisationsmechanismus (7) eingerichtet ist, um sich in die erste Position (P1) zu bewegen und das erste Wellenelement (5) derart mit dem zweiten Wellenelement (6) zu verbinden, dass das Stützelement (3) zusammen mit dem ersten Element (17) in Richtung einer Position schwenkt, in welcher die elektronische Vorrichtung (2) geschlossen ist, ohne dass eine beliebige separate Aktion durch den Benutzer auszuführen ist.

7. Elektronische Vorrichtung (2) nach Anspruch 6, wobei das zweite Element (18) einen hohlzylindrischen Abschnitt (19) umfasst, der dazu konfiguriert ist, die Scharnierstruktur (4) aufzunehmen, wobei eine Mittelachse des hohlzylindrischen Abschnitts (19) koaxial zu der Schwenkachse (A) ist, wobei der Synchronisationsmechanismus (7) der Stützanordnung (1) dazu konfiguriert ist, mit einer Innenfläche des hohlzylindrischen Abschnitts (19) in Eingriff zu stehen.

8. Elektronische Vorrichtung (2) nach Anspruch 6 oder 7, wobei das schwenkbare Stützelement (3) der Stützanordnung (1) gleichzeitig mit dem ersten Element (17) und mit einer höheren Winkelgeschwindigkeit als dieses um die Schwenkachse (A) schwenkt, solange der Synchronisationsmechanismus (7) in der ersten Position (P1) steht.

9. Elektronische Vorrichtung (2) nach einem der Ansprüche 6 bis 8, wobei der Synchronisationsmechanismus (7) von der ersten Position (P1) in die zweite Position (P2) bewegt wird, wenn das erste Element (17) einen voreingestellten Betrachtungswinkel (α) relativ zu dem zweiten Element (18) erreicht.

10. Elektronische Vorrichtung (2) nach einem der Ansprüche 6 bis 9, wobei das erste Element (17) dazu konfiguriert ist, zumindest teilweise durch die Scharnierstruktur (4) lösbar mit dem zweiten Element (18) verbunden zu sein.

## Revendications

1. Agencement de support (1) pour un appareil électronique (2), ledit agencement de support (1) comprenant :
- un élément de support pivotant (3) ; et
- une structure de charnière (4) configurée pour relier ledit élément de support (3) audit appareil électronique (2) le long d'un axe de pivot (A),
ladite structure de charnière (4) comprenant :
un premier élément d'arbre (5) et un second élément d'arbre (6) se prolongeant le long dudit axe de pivot (A), ledit premier élément d'arbre (5) étant connecté de manière rotative audit appareil électronique (2),
ledit second élément d'arbre (6) étant connecté de manière fixe audit élément de support (3), et
un mécanisme de synchronisation (7) connecté de manière fonctionnelle audit premier élément d'arbre (5) et audit second élément d'arbre (6) et configuré pour se déplacer le long dudit axe de pivot (A),
ledit mécanisme de synchronisation (7) étant configuré pour, lorsqu'il est situé à une première position (P1) le long dudit axe de pivot (A), entre en contact avec ledit premier élément d'arbre (5) de telle sorte que, lors de la rotation dudit premier élément d'arbre (5), ledit second élément d'arbre (6) tourne avec ledit premier élément d'arbre (5) à la fois dans le sens horaire et antihoraire de sorte que ledit élément de support (3) pivote par rapport audit appareil électronique (2), et
ledit mécanisme de synchronisation (7) étant configuré pour, lorsqu'il est situé à une seconde position (P2) le long dudit axe de pivot (A), ne plus entrer en contact avec ledit premier élément d'arbre (5) et verrouiller ledit second élément d'arbre (6) avec ledit appareil électronique (2) de telle sorte que ledit second élément d'arbre (6) est empêché de tourner avec ledit premier élément d'arbre (5) de manière à verrouiller ledit élément de support (3) par rapport audit appareil électronique (2) ;
dans lequel ledit mécanisme de synchronisation (7) comprend également un élément creux (9) configuré pour enfermer au moins partiellement ledit premier élément d'arbre (5) lorsqu'il est dans ladite première position (P1), et pour enfermer au moins partiellement ledit premier élément d'arbre (5) et ledit second élément d'arbre (6) lorsqu'ils sont dans ladite seconde position (P2) ;
dans lequel ledit élément creux (9) engage ledit second élément d'arbre (6) au moyen d'au moins une arête (11a) et d'une rainure correspondante (11b), l'une de ladite arête (11a) et de ladite rainure (11b) se prolongeant le long d'une surface périphérique dudit second élément d'arbre (6), et l'autre de ladite arête (11a) et de ladite rainure (11b) se prolongeant le long d'une surface intérieure dudit élément creux (9),
dans lequel ledit mécanisme de synchronisation (7) comprend également un élément coulissant (13) configuré pour déplacer ledit élément creux (9) dans une première direction (D1) le long dudit axe de pivot (A), de ladite première position (P1) à ladite seconde position (P2) ; et
dans lequel ledit second élément d'arbre (6) comprend un premier arbre (6a) et un second arbre (6b), ledit premier arbre (6a) étant connecté de manière fonctionnelle audit mécanisme de synchronisation (7), ledit second arbre (6b) étant connecté de manière fixe audit élément de support (3) ;
dans lequel ledit second élément d'arbre (6) comprend également un agencement d'engrenages (16) interconnectant ledit premier arbre (6a) et ledit second arbre (6b) de telle sorte que ledit second arbre (6b) tourne simultanément avec, et à une vitesse angulaire plus élevée que, ledit premier arbre (6a),
dans lequel l'élément coulissant (13) est configuré pour déplacer l'élément creux (9) au moyen d'un mécanisme à came, et l'élément coulissant (13) forme une première partie du mécanisme à came, tandis qu'une seconde partie (20) du mécanisme à came est formée par une section du premier élément d'arbre (5).

2. Agencement de support (1) selon la revendication 1, dans lequel ledit mécanisme de synchronisation (7) entre en contact avec une surface dudit appareil électronique (2) au moyen d'au moins une saillie (8a) et d'un évidement correspondant (8b), l'un de ladite saillie (8a) et dudit évidement (8b) étant disposé sur une surface dudit mécanisme de synchronisation (7), et l'autre de ladite saillie (8a) et dudit évidement (8b) étant disposé sur ladite surface dudit appareil électronique (2).

3. Agencement de support (1) selon la revendication 1, dans lequel ledit élément creux (9) engage ledit premier élément d'arbre (5) au moyen d'au moins une arête (12a) et d'une rainure correspondante (12b), l'une de ladite arête (12a) et de ladite rainure (12b) étant disposée sur une surface périphérique dudit premier élément d'arbre (5), et l'autre de ladite arête (12a) et de ladite rainure (12b) étant disposée sur une surface intérieure dudit élément creux (9).

4. Agencement de support (1) selon l'une quelconque des revendications 1 à 3, dans lequel ledit mécanisme de synchronisation (7) comprend également un élément de retour (14) configuré pour déplacer ledit élément creux (9) dans une seconde direction (D2) le long dudit axe de pivot (A), de ladite seconde position (P2) à ladite première position (P1).

5. Agencement de support (1) selon l'une quelconque des revendications précédentes, dans lequel ledit premier élément d'arbre (5) comprend un élément de frottement (15) configuré pour entrer en contact avec une surface dudit appareil électronique (2) de telle sorte que la rotation dudit premier élément d'arbre (5) nécessite une force supérieure à un coefficient de frottement dudit élément de frottement (15).

6. Appareil électronique (2) comprenant un premier élément (17), un second élément (18) et l'agencement de support (1) selon l'une quelconque des revendications 1 à 5,
ledit premier élément (17) étant connecté de manière pivotante audit second élément (18) au moins partiellement au moyen dudit agencement de support (1) le long de l'axe de pivotement (A) dudit agencement de support (1), le premier élément d'arbre (5) dudit agencement de support (1) étant connecté de manière fixe audit premier élément (17) et connecté de manière rotative audit second élément (18), dans lequel lorsque le premier élément (17) est pivoté, d'une position ouverte, à un angle qui est inférieur à un angle de vision prédéfini (α), le mécanisme de synchronisation (7) est adapté pour se déplacer vers la première position (P1) et interconnecter le premier élément d'arbre (5) avec le second élément d'arbre (6) de telle sorte que l'élément de support (3) pivote avec le premier élément (17) vers une position dans laquelle l'appareil électronique (2) est fermé sans qu'aucune action séparée ne doive être entreprise par un utilisateur.

7. Appareil électronique (2) selon la revendication 6, dans lequel ledit second élément (18) comprend une section cylindrique creuse (19) configurée pour recevoir ladite structure de charnière (4), un axe central de ladite section cylindrique creuse (19) étant coaxial avec ledit axe de pivot (A), le mécanisme de synchronisation (7) dudit agencement de support (1) étant configuré pour entrer en contact avec une surface intérieure de ladite section cylindrique creuse (19).

8. Appareil électronique (2) selon la revendication 6 ou 7, dans lequel l'élément de support pivotant (3) dudit agencement de support (1) pivote simultanément avec, et à une vitesse angulaire supérieure à celle dudit premier élément (17), autour dudit axe de pivot (A) tant que le mécanisme de synchronisation (7) est dans la première position (P1).

9. Appareil électronique (2) selon l'une quelconque des revendications 6 à 8, dans lequel ledit mécanisme de synchronisation (7) est déplacé de la première position (P1) à la seconde position (P2) lorsque ledit premier élément (17) atteint un angle de vision prédéfini (α) par rapport audit second élément (18).

10. Appareil électronique (2) selon l'une quelconque des revendications 6 à 9, dans lequel ledit premier élément (17) est configuré pour être connecté de manière amovible audit second élément (18) au moins partiellement au moyen de ladite structure de charnière (4).
